# EUROPÄISCHE PATENTSCHRIFT

(11) **EP 1 706 713 B1**
(45) Veröffentlichungstag und Bekanntmachung des Hinweises auf die Patenterteilung: **27.06.2007**
(21) Anmeldenummer: 04802877.3
(22) Anmeldetag: 03.12.2004
(51) Int. Cl.: G01G 21/24

(54) **WÄGEAUFNEHMER**
WEIGHTING PICK-UP
CAPTEUR DE PESEE

(30) Priorität: 05.12.2003 DE 20319017 U
(43) Veröffentlichungstag der Anmeldung: 04.10.2006
(73) Patentinhaber: Wipotec Wiege- und Positioniersysteme GmbH, 67657 Kaiserslautern (DE)
(72) Erfinder: HAUCK, Timo, 6763 Kaiserslautern (DE)
(74) Vertreter: Mischung, Ralf
(86) Internationale Anmeldenummer: PCT/DE2004/002669
(87) Internationale Veröffentlichungsnummer: WO 2005/054796

(56) Entgegenhaltungen:
- EP-A- 0 518 202
- EP-A- 1 195 588
- DE-C1- 19 923 207

## Beschreibung

Die vorliegende Erfindung betrifft einen vorzugsweise monolithisch ausgebildeten Wägeaufnehmer nach dem Oberbegriff des Anspruchs 1.

Derartige Wägeaufnehmer sind aus dem Stand der Technik bekannt und werden insbesondere für elektronische Waagen nach dem Prinzip der elektromagnetischen Kraftkompensation eingesetzt. Bei diesem Waagentyp wird ein relativ zu einem Grundkörper beweglich geführter Lastaufnehmer mit der zu wiegenden Gewichtskraft beaufschlagt, wobei diese Kraft meist mittels Übersetzungselementen verringert und schließlich mittels einer elektromagnetischen Spule kompensiert wird.

Die Wägeaufnehmer werden vorzugsweise monolithisch, also aus einem Stück ausgebildet, um ungleichförmige Wärmespannungen oder sonstige, aus unterschiedlichen Materialien resultierende störende Eigenschaften zu vermeiden.

Aus der DE 199 23 207 C1 ist ein Wägeaufnehmer bekannt, bei dem wenigstens drei Übersetzungshebel zur Kraftuntersetzung einer Gewichtskraft vorgesehen sind. Ein gehäusefester Bereich erstreckt sich dabei in den Bereich der Übersetzungshebel, um für diese Abstützpunkte zu bilden. Der vorkragende Bereich erstreckt sich dabei im Wesentlichen symmetrisch zu einer senkrecht gedachten Ebene, die durch die Spule und den Lastaufnehmer hindurch geht.

Der Stand der Technik weist den Nachteil auf, dass die monolithisch ausgebildeten Wägelager aufwendig zu fertigen sind. Gleichzeitig wird die wünschenswerte kompakte Bauweise nicht in einem zufriedenstellenden Maß erreicht.

Aufgabe der Erfindung ist es daher, ein Wägelager anzubieten, welches auf einfache Weise, in kompakter Bauart und damit kostengünstig herzustellen ist.

Die Aufgabe wird gelöst durch einen Wägeaufnehmer nach Anspruch 1.

Die Erfindung geht von der Erkenntnis aus, dass eine vorteilhafte und einfache Bauweise von monolithischen Wägeaufnehmem dadurch erreicht werden kann, dass einzelne Kraftübersetzungselemente wenigstens teilweise asymmetrisch zur einer Ebene E ausgebildet bzw. angeordnet werden. Hierdurch wird Bauraum gespart und die Bearbeitung vorteilhaft vereinfacht, wie nachstehend zu sehen sein wird.

Eine einfachste Ausführungsform der Erfindung ist demnach so ausgebildet, dass der Wägeaufnehmer einen feststehenden Grundkörper und einen Lastaufnehmer aufweist. Der Lastaufnehmer ist dabei - in einer ersten Richtung X vom Grundkörper beabstandet - mittels Parallelführungselementen an diesem angelenkt und dient als Beaufschlagungselement für eine zu erfassende Gewichtskraft. Er ist dabei in einer zweiten, zur ersten Richtung X senkrechten Richtung Y, und damit in Richtung der auf den Lastaufnehmer aufgebrachten Gewichtskraft beweglich. (Im Folgenden sei unter "Richtung" - sofern nicht anders angegeben - auch die jeweilige Gegenrichtung gemeint.)

Weiterhin sind im Sinne einer hebelmäßigen Kraftübersetzung in Reihe wirkend angeordnete Kraftübersetzungselemente vorgesehen. Diese Kraftübersetzungselemente, die beispielsweise nach den einfachen Hebelgesetzen eine Kraft untersetzen, sind so aneinander gekoppelt, dass die in ein erstes Kraftübersetzungselement eingeleitete Kraft um einen Faktor untersetzt wird, und diese reduzierte Kraft in das nachfolgende Kraftübersetzungselement eingeleitet wird. Durch solche miteinander gekoppelte Kraftübersetzungselemente kann eine Gewichtskraft auf das für die elektronische Erfassung erforderliche Maß herabgesetzt werden.

Als "erstes" Kraftübersetzungselement sei im folgenden dasjenige Element bezeichnend, welches die in den Lastaufnehmer eingebrachte Gewichtskraft unmittelbar oder über ein Koppelelement erfährt. Die weiteren Kraftübersetzungselemente sind dann in einer gedachten Kraftflussrichtung, ausgehend vom Lastaufnehmer in Richtung zur Spule "stromabwärts" des ersten Kraftübersetzungselements angeordnet, wobei zwischen den Kraftübersetzungselementen Koppelelemente vorgesehen sein können, die die zu übertragende Kraft im Wesentlichen unverändert weiterleiten sollen.

Als letztes Kraftübertragungselement sei im Folgenden dasjenige Element verstanden, welches den in Kraftflussrichtung letzten Übersetzungsvorgang bewirkt. An diesem letzten Übersetzungselement oder an einem daran angeordneten Hebelarm ist die vorgenannte Spule angeordnet, welche durch Beaufschlagung mit einem geeigneten Strom die durch die Gewichtskraft veranlasste Auslenkung des letzten Kraftübersetzungselements ausgleichen soll.

Zum Verständnis der zuvor erwähnten asymmetrischen Anordnung sei eine gedachte Ebene E vorgesehen, welche sich in den Richtungen X und Y, also auch in Richtung der auf den Lastaufnehmer aufgebrachten Gewichtskraft erstreckt, und welche den Lastaufnehmer oder die darin eingebrachte Gewichtskraft symmetrisch und senkrecht teilt. Bevorzugt wird von einer homogenen Gewichtskraft-Einleitung in den Lastaufnehmer ausgegangen, so dass die Ebene die eingeleitete Gewichtskraft und den Lastaufnehmer in zwei gleiche Teile teilt. Bei einer zentralen Anordnung der Spule wird auch diese von der gedachten Ebene entsprechend symmetrisch geteilt.

Der Stand der Technik sieht vor, die Kraftübersetzungselemente symmetrisch zu dieser Ebene auszubilden, um vermeintlich gleiche Belastungen in den "parallelen" Komponenten von bspw. gabelförmig geteilten Kraftübersetzungselementen zu erzeugen. Dies erfordert jedoch einen höheren konstruktiven und fertigungstechnischen Aufwand und wird den Beanspruchungen des Wägeaufnehmers nicht optimal gerecht. Der Vorteil einer wenigstens teilweise asymmetrischen Anordnung wenigstens eines Kraftübersetzungselements liegt darin, dass auf zusätzliche Hinterschneidungsbearbeitungen, wie sie bei symmetrischen bzw. geteilten Kraftübersetzungselementen erforderlich sind, verzichtet werden kann.

Im Stand der Technik erstreckt sich vom Grundkörper ein vorkragender Grundkörperteil in Richtung X in den Bereich zwischen den einzelnen Kraftübersetzungselementen, um dort die vorgeschriebenen Lagerstellen auszubilden. Zweckmäßigerweise wird die Ausdehnung des vorkragenden Teils des Grundkörpers in Y-Richtung dabei möglichst hoch gewählt, um die Steifigkeit dieses Teils gegen eine Kraft in Richtung Y zu maximieren. Diesem Bestreben stehen jedoch die im Wesentlichen in Richtung X verlaufenden Kraftübersetzungselemente räumlich im Weg. Im Stand der Technik behilft man sich damit, dass die Kraftübersetzungselemente symmetrisch und in Gabelform zu beiden Seiten der Ebene E verlaufen, während sich im Gabel-Zwischenraum der vorkragende Teil des Grundkörper möglichst weit in Richtung Y ausdehnt. Dies allerdings muss damit erkauft werden, dass die zweigeteilten Kraftübersetzungselemente von beiden gegenüberliegenden Seiten der Ebene E spiegelsymmetrisch bearbeitet werden müssen, um eine gleichmäßige Kraftübertragung in beiden Teilen des geteilten Kraftübersetzungselements zu gewährleisten. Entsprechend längere Bearbeitungszeiten und Kosten sind die Folge.

Die erfindungsgemäße Vorrichtung dagegen geht davon aus, dass sich die maximal mögliche Steifigkeit des vorkragenden Grundkörperteils mit einer einfachen und kostengünstigen Herstellungsbearbeitung des Wägeaufnehmers verbinden lässt, wenn wenigstens ein Kraftübersetzungselement asymmetrisch zur Ebene E ausgebildet wird. Beispielsweise ist vorgesehen, den vorkragenden Teil des Grundkörpers auf einer Seite der Ebene E in Richtung Z bis zum Rand des üblicherweise quaderförmigen Wägeaufnehmers auszubilden, während er gleichzeitig eine maximale Ausdehnung und damit Steifigkeit in Richtung Y behält.

Auf der anderen Seite der Ebene E wird die vorbeschriebene maximale Y-Ausdehnung nicht bis zum Rand des Wägeaufnehmers beibehalten. Stattdessen kann auf dieser Seite und damit seitlich vom vorkragenden Teil des Grundkörpers wenigstens ein oder auch mehrere Kraftübersetzungselemente angeordnet werden. Diese Elemente können dann durch Zugang ausschließlich von einer Seite der Ebene E hergestellt werden, da ein entsprechender zweiter Gabelarm der Elemente mangels symmetrischer Ausführung auf der anderen Seite der Ebene E fehlt. Nach Bedarf kann das letzte oder auch bereits vorgeschaltete Kraftübersetzungselemente durch geeignete Aussparungen wieder symmetrisch zur Ebene E zusammengeführt und zur Spule hin ausgebildet sein, wenn die Spule selbst wieder symmetrisch zur Ebene E angeordnet sein soll.

Eine einfache Ausführungsform der vorgenannten Erfindung sieht beispielsweise vor, dass das erste Kraftübersetzungselement im Bereich seiner Ankopplung an den Lastaufnehmer oder ein Koppelelement zunächst über die ganze Z-Breite des Wägeaufnehmers ausgebildet ist. Insbesondere auch die Lagerstelle für dieses erste Kraftübersetzungselement ist in Z-Richtung möglichst breit ausgebildet, um die an dieser Stelle noch relativ hohen Kräfte und evtl. Kippmomente gut abfangen zu können.

In seiner Erstreckung in X-Richtung zum Ankopplungspunkt für das nachfolgende Kraftübersetzungselement wird das erste Kraftübersetzungselement jedoch asymmetrisch zur Ebene E ausgebildet, so dass sich der vorkragende Teil des Grundkörpers in den von diesem ersten Kraftübersetzungselement nicht ausgefüllten Bereich in Y-Richtung erstrecken kann. Damit wird - wie zuvor beschrieben - die Steifigkeit des vorkragenden Teils optimiert. Die weiteren hintereinander geschalteten Kraftübersetzungselemente sind dann im Wesentlichen in Z-Richtung seitlich des vorkragenden Teils des Grundkörpers und damit asymmetrisch zur Grundebene E angeordnet. Die in das erste Kraftübersetzungselement eingebrachte Kraft wird also entweder nur auf einer Seite der Ebene E, zumindest aber asymmetrisch zu dieser, in das nachfolgende Kraftübersetzungselement eingeleitet.

Die weiteren Übersetzungsvorgänge spielen sich dann nach dieser Ausführungsform auf der einen Seite, zumindest aber asymmetrisch zur Ebene E ab, wobei das letzte Kraftübersetzungselement mit seinem die Spule tragenden Arm wieder durch geeignete Aussparungen in eine Lage symmetrisch zur Ebene E zurück geführt werden kann.

Ein weiterer Vorteil der vorgenannten Ausführungsform ergibt sich daraus, dass die einzelnen Lagerstellen für die Kraftübersetzungselemente so an den Grundkörper angeordnet sind, dass dieser eine einfache, wenig verwinkelte Form beibehalten kann. Der Stand der Technik dagegen erfordert eine komplizierte Struktur des Grundkörpers, da die einzelnen Lagerstellen oft Kräfte in verschiedene Richtungen aufnehmen müssen.

Eine besonders vorteilhafte Ausführungsform der Erfindung sieht daher vor, dass an wenigstens einem Kraftübersetzungselement alle angreifenden Kräfte parallel oder antiparallel zueinander gerichtet sind. Ein solcher Zustand ergibt sich dann, wenn das wenigstens eine Kraftübersetzungselement als Hebel - insbesondere ohne relevante Winkel - ausgebildet ist. Die an dem Kraftübersetzungselement angreifenden Kräfte weisen daher in die gleiche bzw. die entgegengesetzte Richtung, wodurch eine einfache Form dieses Elements möglich ist. Gegenüber dem Stand der Technik fällt nämlich auf, dass Kraftübersetzungselemente, deren Kräfte in zueinander rechtwinkligen Richtungen am Element angreifen, eine meist aufwändige und naturgemäß verwinkelte und damit raumgreifende Form haben, deren Herstellung, insbesondere in monolithischer Bauweise kompliziert und zeitaufwändig ist.

Eine weitere vorteilhafte Ausführungsform der Erfindung sieht vor, dass jedes der eingesetzten Kraftübersetzungselemente so ausgerichtet ist, dass die angreifenden Kräfte alle parallel oder antiparallel zueinander gerichtet sind. Speziell durch eine solche Vorgabe wird eine besonders komprimierte Bauweise bzw. Anordnung der Elemente besonders einfach möglich. Alle Übersetzungskräfte innerhalb des monolithischen Blocks sind dabei in eine Richtung (bspw. Y) bzw. dieser entgegengesetzt ausgerichtet. Die Anordnung der Lagerstellen, an denen sich die Kraftübersetzungselemente gegenüber dem feststehenden Grundkörper abstützen, ist unkompliziert und stabil wählbar, und auch die Herstellung geht mangels Winkelkonstruktionen einfacher vor sich.

Eine besonders elegante Ausführungsform der Erfindung sieht vor, die zur Kraftübersetzung verwendeten Kraftübersetzungselemente im Wesentlichen in einer spiralförmigen Struktur anzuordnen. Auf diese Weise lässt sich die Kraftübersetzung quasi ineinander schachteln, indem die einzelnen Hebel im Wesentlichen parallel zueinander liegen, während die Kraft an den Hebeln schneckenartig "entlang läuft" und dabei untersetzt wird.

In einer Ausführungsform der Erfindung sind dabei drei Kraftübersetzungselemente im Sinne einer spiralförmigen Struktur angeordnet. In einer zur ersten Richtung X und zur zweiten Richtung Y senkrecht gedachten dritten Richtung Z betrachtet, erscheint das Profil der Kraftübersetzungselemente - gegebenenfalls in Verbindung mit den vorgenannten Koppelelementen - als ein Schneckenprofil. Ausgehend von einem unmittelbar am Lastaufnehmer angeordneten ersten Koppelelement erstreckt sich das erste Kraftübersetzungselement im Wesentlichen rechtwinklig zum ersten Koppelelement in Richtung X. Dabei ist dieses erste Kraftübertragungselement über eine Lagerstelle an dem Grundkörper so abgestützt, dass es im Sinne eines Hebels fungiert. Ein zweites Koppelelement, welches sich wiederum im Wesentlichen rechtwinklig zum ersten Kraftübersetzungselement erstreckt, übertragt die erstmalig untersetzte Kraft auf ein zweites Kraftübersetzungselement, welches sich rechtwinklig zum zweiten Koppelelement und damit im Wesentlichen wieder parallel zum ersten Kraftübersetzungselement erstreckt. In Kraftflussrichtung schließt sich über ein drittes Koppelelement das dritte Kraftübersetzungselement an. Es ist im Wesentlichen parallel zu den beiden anderen Kraftübersetzungselementen und zwischen diesen liegend angeordnet. Folgt man nun ausgehend vom Lastaufnehmer dem Kraftfluss bis zur Spule, so ist dessen Form bzw. die Anordnung der Kraftübersetzungselemente in der genannten spiralförmigen Struktur offensichtlich.

Durch die Ineinanderschachtelung der einzelnen Kraftübersetzungselemente wird erheblich an Bauraum eingespart, wobei gleichzeitig auch der erforderlichen Dimensionierung der einzelnen Elemente Rechnung getragen werden kann. Mit abnelmender, zu übersetzender Kraft verringert sich naturgemäß auch das erforderliche Profil der einzelnen Elemente, so dass die weiter innen liegenden Elemente entsprechend kleiner werdend ausfallen können.

Eine vorteilhafte Ausführungsform der Erfindung sieht vor, dass das letzte Kraftübersetzungselement oder der daran angeordnete Hebelarm mit einem Hebelabschnitt die spiralförmige Struktur von innen nach außen durchbricht, um außen eine Kraft einzuleiten oder abzunehmen. Durch eine solche Anordnung wird einerseits die kompakte Bauweise des Wägeaufnehmers in der vorgenannten Spiralstruktur unterstützt, andererseits wird ausreichend Raum geschaffen, um die Auslenkung des letzten Kraftübersetzungselements mit der möglicherweise raumgreifenden Spule zu kompensieren.

Als weiterer Vorteil der Ausführungsform ergibt sich, dass das letzte Kraftübersetzungselement durch den dann längeren Hebelarm eine große Untersetzungsstufe bildet, was ohnehin der Zweck der Übersetzungselemente ist.

Das letzte Kraftübersetzungselement bzw. ein möglicherweise daran angeordneter separater Hebelarm durchbricht die Spiralstruktur beispielsweise durch eine Aussparung, die in einem Koppelelement oder einem der anderen Kraftübersetzungselemente vorgesehen ist. Der die Spule tragende Arm kann also einstückig als Teil des letzten Kraftübersetzungselements oder als separat daran zu befestigender Arm ausgebildet sein. Letzteres erleichtert die Herstellung bzw. Montage, Ersteres erhält die aus dem Stand der Technik bekannten Vorteile der monolithischen Bauweise.

Die erfinderische asymmetrische Anordnung der Kraftübersetzungselemente bzw. die Ausbildung des vorkragenden Teils des Grundkörpers lässt sich weiter verfeinern, indem dieser vorkragende Teil des Grundkörpers in Richtung X und/oder in Richtung Z wenigstens eine Stufe aufweist. Durch geeignete Stufung des vorkragenden Teils kann dessen Steifigkeit den jeweiligen Kräfteverhältnissen bzw. Erfordernissen angepasst werden. So ist für eine relativ hohe Kraft, wie sie insbesondere an der Lagerstelle des ersten Kraftübersetzungselementes auftritt, eine entsprechend hohe Steifigkeit des vorkragenden Teils wünschenswert. Reduziert sich die in den Lagerstellen aufzubringende Kraft aufgrund der Untersetzung, so ist auch eine geringere Steifigkeit des vorlcragenden Teils im Bereich der dem jeweiligen Kraftübersetzungselement zugehörigen Lagerstelle ausreichend, um den Anforderungen an die Genauigkeit des Wägeergebnisses gerecht zu werden. Auf diese Weise können unnötige Materialanhäufungen umgangen werden, wodurch auf unnötiges Gewicht verzichtet wird.

Der vorkragende Teil erstreckt sich vorteilhafterweise in den Bereich, welcher durch die asymmetrische Anordnung des oder der Kraftübertragungselemente nicht räumlich beansprucht wird. Er kann dabei zu Stabilitätszwecken den ihm gebotenen Raum bestmöglich ausfüllen, andererseits aber aus Gewichts- oder Fertigungsgründen auch kleiner gehalten werden.

Eine weitere vorteilhafte Ausführungsform der Erfindung sieht vor, dass die Steifigkeit des vorkragenden Grundkörperteils im Bereich einer Lagerstelle qualitativ oder proportional der an der Lagerstelle aus dem zugehörigen Kraftübersetzungselement einwirkenden Kraft nachgebildet wird. Dies bedeutet, dass die in Kraftflussrichtung abnehmende Auflagekraft auf den jeweiligen Lagerstellen Einfluss findet auf die zugehörige Dimensionierung des vorkragenden Grundkörperteils. Eine geringere Auflagekraft erfordert eine geringere Steifigkeit des vorkragenden Teils. Diese Dimensionierung kann dahingehend optimiert werden, dass der jeweilige Stützbereich der Lagerstellen bzw. das zugehörige vorkragende Grundkörperteil exakt auf die zu erwartenden Lasten abgestimmt bzw. dimensioniert wird.

Bewirkt also ein Kraftübersetzungselement eine Untersetzung um einen bestimmten Faktor, so kann die Lagerstelle für das nachfolgende Kraftübersetzungselement entsprechend schwächer dimensioniert werden, um trotzdem noch den Anforderungen an die Wägegenauigkeit gerecht zu werden. Eine qualitative Anpassung bedeutet somit nur eine grundsätzliche Reduzierung der vorliegenden Abmessungen des vorkragenden Teils in den jeweiligen Lagerstellen, eine proportionale Anpassung dagegen die genaue rechnerische Ermittlung der erforderlichen Gestalt des vorkragenden Teils im Bereich der zugehörigen Lagerstelle, abhängig von der dort aufzunehmenden Kraft.

Eine weitere vorteilhafte Ausführungsform der Erfindung sieht vor, dass wenigstens ein Abschnitt des vorkragenden Grundkörpei-teils in Y-Richtung die maximale Höhe zwischen den Parallelführungselementen einnimmt. Auf diese Weise wird sichergestellt, dass das vorkragende Grundkörperteil die bestmögliche Steifigkeit aufweist, um Verformungen entgegenzuwirken. Durch die vorgeschriebene asymmetrische Bauweise kann sich das Grundkörperteil dabei idealerweise über die gesamte Höhe zwischen den beiden Parallelführungselementen erstrecken. Lediglich die Materialausnehmungen zur Abgrenzung gegenüber den Parallelführungselementen limitieren die Dimensionierung des vorkragenden Teils in Y-Richtung. Je größer also die Ausdehnung des vorkragenden Teils in Y-Richtung gewählt werden kann, um so weniger kann die in eine Lagerstille eingeleitete Kraft zu einer Verformung des vorkragenden Teils und damit zu einer Fehlmessung beitragen.

Die nach dem Stand der Technik ausgebildeten monolithischen Wägesysteme mit ihren symmetrischen bzw. in Gabelkonstruktion ausgeführten Kraftübertragungselementen verhindern eine solche maximale Ausdehnung des vorkragenden Teils oder erfordern eine beidseitige Bearbeitung des Blocks.

Eine weitere Ausführungsform der Erfindung ist dergestalt ausgebildet, dass die zur Definition der Elemente zwischen ihnen angeordneten Aussparungen nur von einer Bearbeitungsseite in den Wägeaufnehmer eingebracht werden.

Da der Wägeaufnehmer mit seinen Kraftübertragungselementen und dem vorkragenden Grundkörperteil asymmetrisch in dem Wägeaufnehmer angeordnet ist, wird das Erfordernis von parallelen Strukturen weitgehend umgangen. Erstreckt sich insbesondere der vorkragende Grundkörperteil in Z-Richtung bis zu einem Seitenrand des Wägeaufnehmers in maximaler Höhe, so wird auf dieser Seite kein Kraftübertragungselement angeordnet. Dieses bzw. noch weitere Kraftübertragungselemente werden auf der gegenüberliegenden Seite des Wägeaufnehmers eingebracht.

Deren Herstellung ist dann vorteilhaft von nur dieser einen Seite des Wägeaufnehmers möglich. Alle Aussparungen, die den Wägeaufnehmer in Z-Richtung vollständig durchlaufen, können somit von nur einer Seite eingebracht werden. Dies spart erheblich an Baubreite und Bearbeitungszeit ein und ermöglicht eine gegenüber dem Stand der Technik deutlich wirtschaftlichere Produktion.

Vorteilhafterweise kann durch diese asymmetrische Anordnung auch auf Aussparungen in den Parallelführungselementen verzichtet werden. Diese sind in einer vorteilhaften Ausführungsform also in X-Richtung und in Z-Richtung durchgehend ausgebildet und bieten damit die maximal mögliche Stabilität für den geführten Lastaufnehmer. Da die Aussparungen, welche nach dem Stand der Technik zur Bearbeitung in Y-Richtung erforderlich sind, nach der vorliegenden Erfindung überflüssig werden, werden auch hier Bearbeitungszeit und damit Kosten eingespart.

Eine besonders vorteilhafte Ausführungsform der Erfindung ist dadurch gekennzeichnet, dass der Wägeaufnehmer in Z-Richtung eine Ausdehnung von nicht mehr als 30 Millimetern aufweist. Diese besonders schmale Struktur kann bei gleichzeitig einfacher und schneller Bearbeitung nur durch die asymmetrische Bauweise erzielt werden, bei der sich beispielsweise der vorkragende Grundkörperteil von der nicht bearbeiteten Seitenwand um etwa 15 Millimeter in Z-Richtung bis etwa zur Mitte des Wägeaufnehmers erstreckt, während auf den weiteren 15 Millimetern bis zur gegenüber liegenden Seite des Wägeaufnehmers ein oder mehrere Kraftübertragungselemente ausgebildet sind. Eine andere Aufteilung zwischen vorkragendem Grundkörperteil und Kraftübertragungselementen ist selbstverständlich ebenfalls frei wählbar.

Weitere vorteilhafte Ausführungsformen ergeben sich aus den abhängigen Ansprüchen

Eine Ausführungsform der Erfindung wird nachstehend anhand eines Figurenbeispiels erläutert.

Von den Figuren zeigt
- Fig. 1: eine teilweise freigelegte schematische, perspektivische Ansicht einer erfindungsgemäßen Ausführungsform;
- Fig. 2: eine Rückansicht der Darstellung gemäß Fig. 1;
- Fig. 3: eine teilweise freigeschnittene Darstellung der Ausführungsform gemäß Fig. 2 und
- Fig. 4: eine Seitenansicht der Kraftübersetzungselemente, wie sie in den vorgenannten Figuren eingesetzt sind.

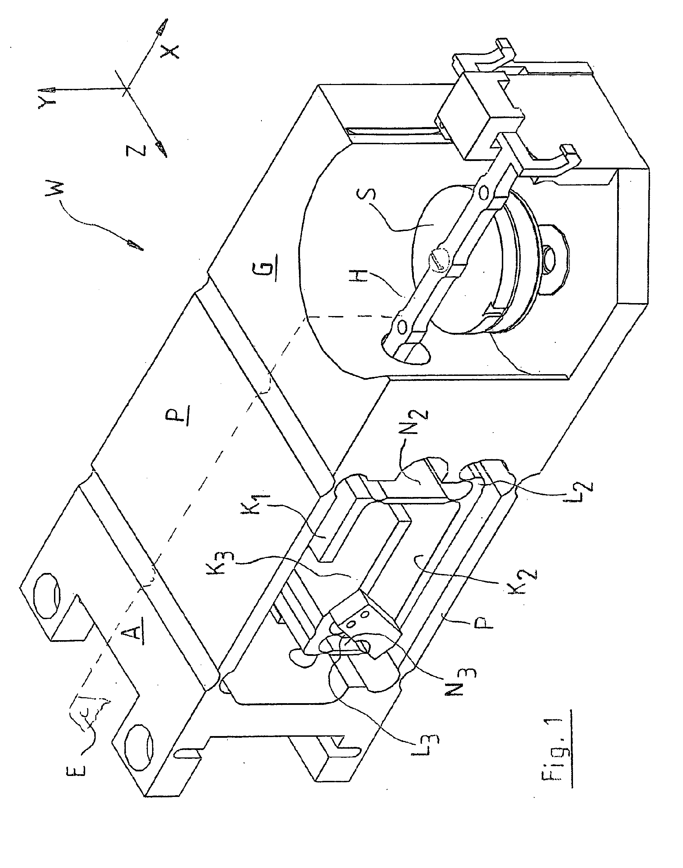

Wie in Figur 1 zu erkennen ist, ist ein Wägeaufnehmer W vorgesehen, der einen festen Grundkörper G aufweist. Entlang einer ersten Achse X erstrecken sich zwei Parallellenker P, welche einen Lastaufnehmer A in einer Richtung Y zu führen in der Lage sind. Eine auf den Lastaufnehmer A aufgebrachte, nicht näher dargestellte Gewichtskraft wirkt in entgegengesetzter Y-Richtung von oben auf den Lastaufnehmer A ein, und trachtet diesen nach unten zu drücken.

Zwischen den beiden Parallellenkern P sind drei Kraftübersetzungselemente K₁, K₂ und K₃ angeordnet. Das Kraftübersetzungselement K₁ ist mit einem Koppelelement N₂ an dem Kraftübersetzungselement K₂ angelenkt. Über ein weiteres Koppelelement N₃ ist das Kraftübersetzungselement K₂ mit dem Kraftübersetzungselement K₃ gekoppelt.

Der Lastaufnehmer A ist über ein in dieser Figur nicht zu sehendes Koppelelement N₁ an dem in der Figur 1 nur teilweise dargestellten Kraftübersetzungselement K₁ angelenkt.

Alle Kraftübersetzungselemente K₁, K₂ und K₃ sind über Lagerstellen mit dem feststehenden Grundkörper G verbunden. An der Lagerstelle L₂ ist das Kraftübersetzungselement K₂ gelenkt, an der Lagerstelle L₃ ist das Kraftübersetzungselement K₃ angelenkt. Die Lagerstelle für das Kraftübersetzungselement K₁ ist in Fig. 1 nicht zu erkennen.

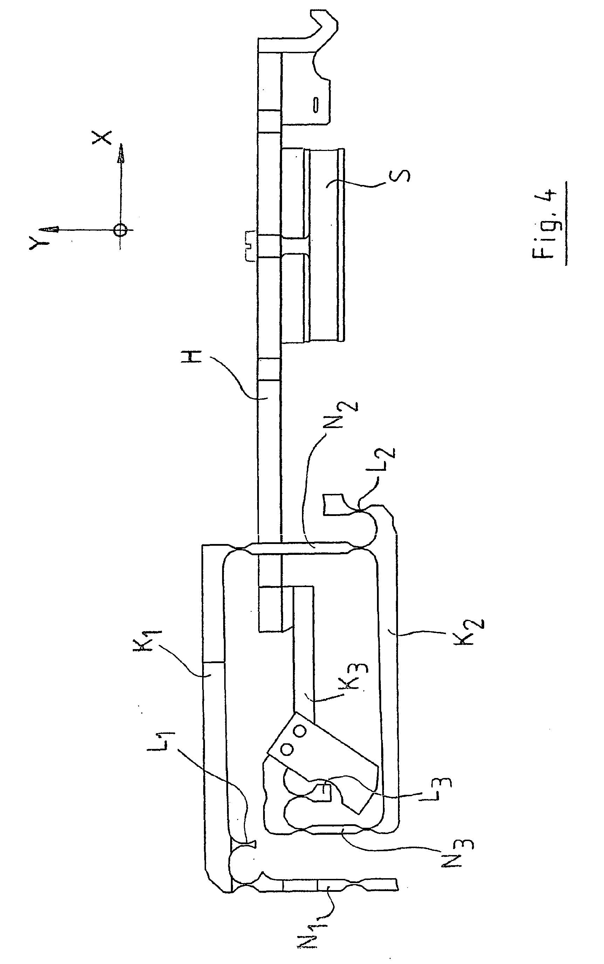

Das Kraftübersetzungselement K₃ erstreckt sich - teilweise verdeckt durch den oberen Parallellenker P und das Kraftübersetzungselement K₁ - mit einem Hebelarm H in Richtung auf eine Spule S. Der Hebelarm H wird, wie insbesondere an Fig. 4 zu sehen sein wird, bei Lastbeaufschlagung des Lastaufnehmers A mit einer Kraft beaufschlagt, die durch geeigneten Spulenstrom kompensiert werden soll.

Der Lastaufnehmer A wird durch eine gestrichelt angedeutete gedachte Ebene E, die sich entlang der Richtungen Z und X erstreckt, symmetrisch geteilt. Die Spule ist in diesem Beispiel asymmetrisch zur Ebene E angeordnet, sie kann jedoch auch symmetrisch dazu angebracht werden.

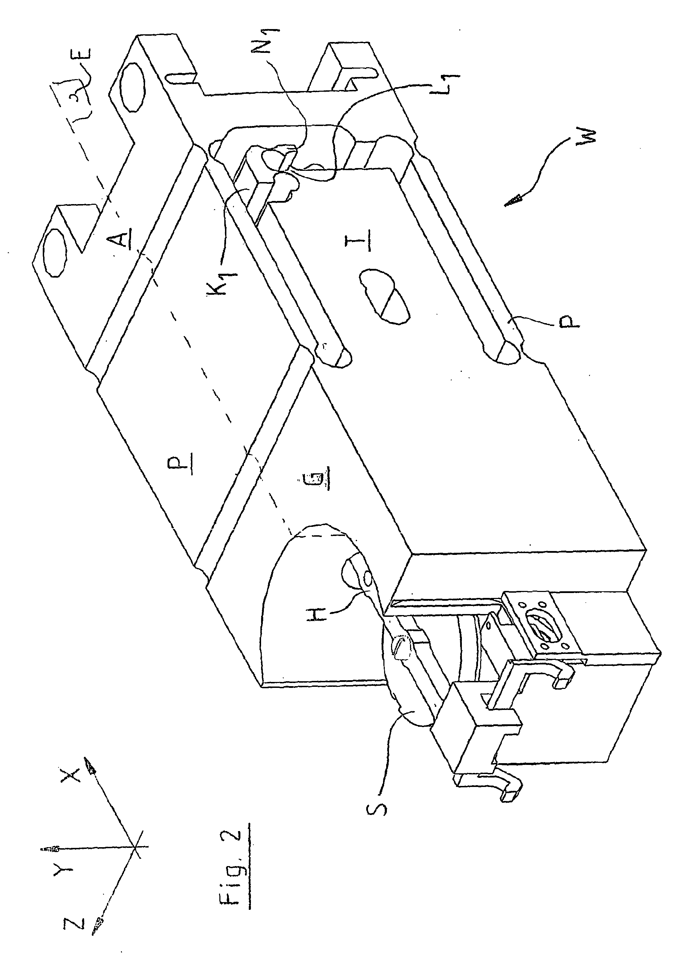

Fig. 2 zeigt die selbe Vorrichtung in einer rückwärtigen Ansicht, so dass relativ zur Fig. 1 der Wägeaufnehmer W nun von seiner Rückseite dargestellt wird.

Zu erkennen ist wiederum der Grundkörper G, sowie die beiden Parallellenker P, welche den Lastaufnehmer A gelenkig führen. Zu sehen ist weiterhin der sich bis zur Rückseite erstreckende Abschnitt des ersten Kraftübersetzungselements K₁. Das Kraftübersetzungselement K₁ ruht über einer Lagerstelle L₁ auf einem vom Grundkörper G vorkragenden Teil T. Das Kraftübersetzungselement K₁ ist an der zu einer Dünnstelle ausgebildeten Lagerstelle L₁ um ein virtuelles Maß in der ebenfalls gestrichelt angedeuteten Ebene E bzw. parallel dazu schwenkbar.

Ebenfalls zu erkennen ist ein Teil des ersten Koppelelements N₁, welches - verdeckt durch den vorkragenden Teil T - das erste Kraftübersetzungselement K₁ mit dem Lastaufnehmer A verbindet.

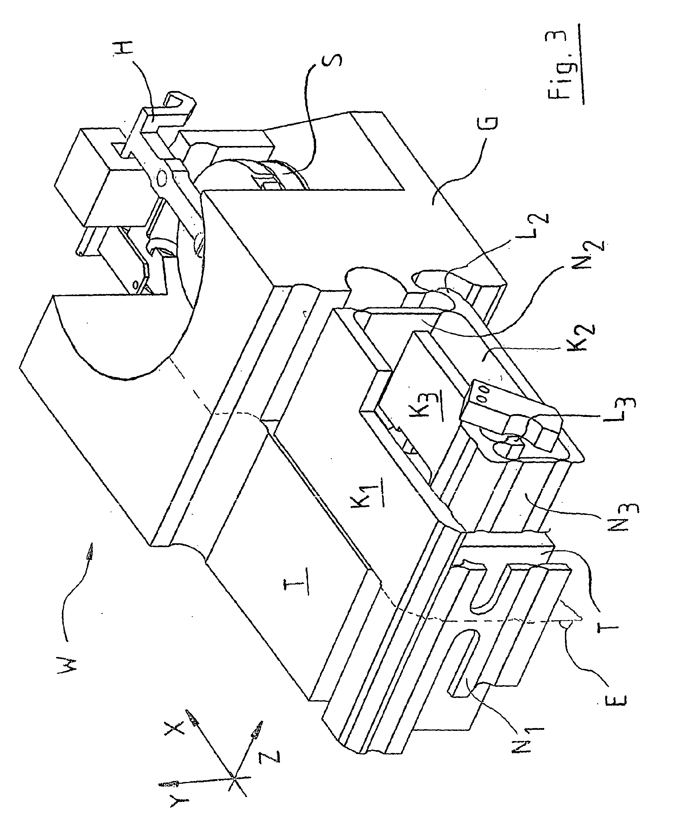

Wie im Vergleich zu Fig. 1 und Fig. 3 zu sehen ist, ist der vorkragende Teil T nur auf der einen Seite der gedachten Ebene E (entgegen der Richtung Z) bis an den Rand der quaderförmigen Gestalt des Wägeaufnehmers, also asymmetrisch zur Ebene E, ausgebildet.

In Fig. 3 ist die Anordnung der Kraftübersetzungselemente bei fortgelassenen Parallellenkern P näher zu erkennen.

Das Koppelelement N₁, welches an dem nicht dargestellten Lastaufnehmer A angreift, überträgt eine in entgegengesetzte Y-Richtung in das Koppelelement N₁ eingebrachte Kraft auf das erste Kraftübersetzungselement K₁. Das Kraftübersetzungselement K₁ erstreckt sich auf der einen Seite der gedachten Ebene E in (entgegengesetzte) Z-Richtung bis zum hinteren Rand des Wägeaufnehmers W. Auf der anderen Seite der Ebene E ist das Kraftübersetzungselement K₁ nicht bis ganz zum vorderen Rand des Wägeaufnehmers W gezogen.

Es erstreckt sich im Wesentlichen ferner nur auf einer Seite der Ebene E, in jedem Fall jedoch asymmetrisch zu dieser, in X-Richtung auf den Grundkörper G zu. Dabei ruht es auf einer in Fig. 3 nicht näher dargestellten Lagerstelle L₁, welche in etwa analog zur Breite des vorkragenden Teils T in Z-Richtung an diesem Teil T ausgebildet ist.

An seinem dem Grundkörper G zugewandten Ende ist das Kraftübersetzungselement K₁ über ein Koppelelement N₂ an dem Kraftübersetzungselement K₂ angelenkt. Das Kraftübersetzungselement K₂ ist über die Lagerstelle L₂ mit dem Grundkörper G verbunden, und greift an seinem dem nicht dargestellten Lastaufnehmer A zugewandtem Ende über ein drittes Koppelelement N₃ an dem dritten Kraftübersetzungselement K₃ an. Die beiden Kraftübersetzungselement K₂ und K₃ sind im Wesentlichen auf einer Seite der gedachten Ebene E angeordnet, sie erstrecken sich somit seitlich (in Z-Richtung) vom vorkragenden Teil T.

Das Kraftübersetzungselement K₃ ruht auf einer Lagerstelle L₃, welche sich ausgehend vom vorkragenden Element T in Z-Richtung erstreckt.

Alle Lagerstellen L₁, L₂ und L₃ stellen damit die Verbindung zum "Festland" des Wägeaufnehmers, also zur unbewegten Masse, wie sie auch durch den Grundkörper G dargestellt ist, dar.

Das Kraftübersetzungselement K₃ weist einen Hebelarm H auf, der sich - verdeckt durch das in Fig. 3 dargestellte Kraftübersetzungselement K₁ - asymmetrisch zur Ebene E durch den Grundkörper G in X-Richtung zur Spule S und darüber hinaus erstreckt. Am freien Ende des Hebelarms H kann eine Kalibrierkraft eingeleitet werden.

In Fig. 4 wird die spiralförmige Anordnung der Kraftübersetzungselemente besonders gut deutlich.

Zu erkennen ist wieder das erste Koppelelement N₁, welches eine im Wesentlichen in Y-Richtung eingeleitete Kraft weitergibt an das im Wesentlichen waagerecht angeordnete erste Kraftübersetzungselement K₁. Dieses ruht auf der zuvor beschriebenen Lagerstelle L₁, und greift an seinem Ende über das Koppelelement N₂ an dem zweiten Kraftübersetzungselement K₂ an.

Das zweite Kraftübersetzungselement K₂ erstreckt sich wieder in Richtung auf das erste Koppelelement N₁, endet jedoch kurz davor, um über ein drittes Koppelelement N₃ an dem dritten Kraftübersetzungselement K₃ anzugreifen, welches im Wesentlichen parallel zu den ersten beiden Kraftübersetzungselementen K₁ und K₂ und zwischen diesen angeordnet ist.

Folgt man gedanklich der eingeleiteten und übersetzten Kraft, so erkennt man, ausgehend vom ersten Koppelelement N₁ einen im Uhrzeigersinn verlaufenden Kraftfluss, der sich in einer spiralförmigen Struktur ins Innere der Anordnung windet.

Erst das dritte Kraftübersetzungselement K₃ durchbricht diese Spiralstruktur, in dem ein an ihm angelenkter Hebelarm H durch eine nicht näher dargestellte Aussparung in Richtung X aus der Spirale herausgeführt wird. An diesem Hebelarm H ist die Spule S angeordnet, um einer Auslenkung des Hebelarms H entgegen zu wirken.

Wie die Figur 4 ebenfalls verdeutlicht, kommen in der beispielhaft gewählten Anordnung nur solche Kraftübersetzungselemente zum Einsatz, bei denen alle eingeleiteten bzw. austretenden Kräfte parallel bzw. antiparallel gerichtet sind.

Greift in das Koppelelement N₁ eine nach unten gerichtete Zugkraft ein, so wird in der Lagerstelle L₁ eine Lagerkraft in entgegengesetzter Richtung erzeugt, während am Koppelelement N₂ eine Zugkraft entsteht. Diese wird mittels einer entgegengesetzten Druckkraft in der Lagerstelle L₂ und im Koppelelement N₃ ausgeglichen.

In der Lagerstelle L₃ resultiert daraus eine in Y-Richtung wirkende Zugkraft, und auch die letztendlich die Spule bewegende Kraft weist in Richtung Y bzw. in die dazu entgegengesetzte Richtung. Je nach Art der im Koppelelement N₁ eingebrachten Kraft (Zugkraft oder Druckkraft) ändern sich zwar die Richtungen der jeweils weitergeleiteten Kräfte (in Y-Richtung oder antiparallel dazu in die entgegengesetzte Richtung), Kräfte in Richtung X oder in die nicht dargestellte Richtung Z treten jedoch nicht auf und müssen daher auch nicht an den Lagerstellen L₁, L₂ und L₃ abgefangen werden.

## Patentansprüche

1. Monolithischer Wägeaufnehmer (W), für eine elektronische Waage nach dem Prinzip der elektromagnetischen Kraftkompensation mittels einer Spule (S), mit einem feststehenden Grundkörper (G) und einem in einer ersten Richtung (X) vom Grundkörper (G) beabstandeten, mittels Parallelführungselementen (P) geführten, in einer von der ersten Richtung (X) verschiedenen zweiten Richtung (Y) beweglichen Lastaufnehmer (A),
a) mit wenigstens einem zur hebelmäßigen Kraftübersetzung angeordneten Kraftübersetzungselement (K₁, K₂, K₃... Kₙ),
b) wobei das erste Kraftübersetzungselement (K₁) zur Aufnahme einer in den Lastaufnehmer (A) in Richtung (Y) einwirkenden Last über ein Koppelelement an den Lastaufnehmer (A) gekoppelt ist, und
c) wobei eine gedachte, in den Richtungen (X) und (Y) erstreckte Ebene (E) den Lastaufnehmer (A) oder die in diesen eingebrachte Gewichtskraft symmetrisch teilt,
**dadurch gekennzeichnet, dass**
d) wenigstens ein Kraftübersetzungselement (Kᵢ) asymmetrisch zur Ebene (E) ausgebildet ist.

2. Wägeaufnehmer (W) nach Anspruch 1, **dadurch gekennzeichnet, dass** mehrere zur hebelmäßigen Kraftübersetzung wirkungsmäßig in Reihe angeordnete Kraftübersetzungselement (K₁, K₂, K₃... Kₙ) vorgesehen sind.

3. Wägeaufnehmer (W) nach Anspruch 1 oder 2, **dadurch gekennzeichnet, dass** an wenigstens einem Kraftübersetzungselement (Kᵢ) alle angreifenden Kräfte parallel oder antiparallel zueinander gerichtet sind.

4. Wägeaufnehmer (W) nach einem der vorigenAnsprüche, **dadurch gekennzeichnet, dass** an jedem Kraftübersetzungselement (K₁, K₂, K₃... Kₙ) die angreifenden Kräfte alle parallel oder antiparallel zueinander gerichtet sind.

5. Wägeaufnehmer (W) nach einem der vorigen Ansprüche, **dadurch gekennzeichnet, dass** die Kraftübersetzungselemente (K₁, K₂, K₃... Kₙ) im wesentlichen in einer spiralförmigen Struktur angeordnet sind.

6. Wägeaufnehmer (W) nach Anspruch 5, **dadurch gekennzeichnet, dass** das letzte Kraftübersetzungselement (Kₙ) oder ein daran angeordneter Hebelarm (H) mit einem Abschnitt die spiralförmige Struktur von innen nach außen durchbricht, um außen eine Kraft einzuleiten und/oder abzunehmen

7. Wägeaufnehmer (W) nach einem der vorigen Ansprüche, **dadurch gekennzeichnet, dass** sich ein vorkragender Teil (T) des Grundkörpers (G) zwischen die Kraftübersetzungselemente (K₁, K₂, K₃... Kₙ) erstreckt und für wenigstens einen Teil der Kraftübersetzungselemente (K₁, K₂, K₃... Kₙ) Lagerstellen (L₁, L₂, L₃... Lₙ) bildet.

8. Wägeaufnehmer (W) nach Anspruch 7, **dadurch gekennzeichnet, dass** der vorkragende Teil (T) des Grundkörpers asymmetrisch zur Ebene (E) ausgebildet ist.

9. Wägeaufnehmer (W) nach Anspruch 7 oder 8, **dadurch gekennzeichnet, dass** der vorkragende Teil (T) des Grundkörpers (G) in Richtung (X) und/oder in die zur Ebene (E) senkrechte Richtung (Z) wenigstens eine Stufe aufweist.

10. Wägeaufnehmer (W) nach einem der Ansprüche 7 bis 9, **dadurch gekennzeichnet, dass** die Steifigkeit des vorkragenden Grundkörperteils (T) im Bereich einer Lagerstelle (Lᵢ) qualitativ oder proportional der an der Lagerstelle (Lᵢ) aus dem zugehörigen Kraftübersetzungselement (Kᵢ) einwirkenden Kraft nachgebildet wird.

11. Wägeaufnehmer (W) nach einem der Ansprüche 7 bis 10, **dadurch gekennzeichnet, dass** wenigstens ein Abschnitt des vorkragenden Grundkörperteils (T) in Y-Richtung die maximale Höhe zwischen den Parallelführungselementen (P) einnimmt.

12. Wägeaufnehmer (W) nach einem der Ansprüche 7 bis 11, **dadurch gekennzeichnet, dass** die zur Definition der Elemente zwischen Ihnen angeordneten Aussparungen nur von einer Bearbeitungsseite in den Wägeaufnehmer eingebracht werden.

13. Wägeaufnehmer (W) nach einem der vorigen Ansprüche, **dadurch gekennzeichnet, dass** die in X-Richtung angeordneten Parallelführungselementen (P) keine Ausnehmungen in Y-Richtung aufweisen.

14. Wägeaufnehmer (W) nach einem der vorigen Ansprüche, **dadurch gekennzeichnet, dass** der Wägeaufnehmer (W) eine Ausdehnung in Z-Richtung von 30mm nicht überschreitet.

15. Wägeaufnehmer (W) nach einem der vorigen Ansprüche, **dadurch gekennzeichnet, dass** die Spule (S) so angeordnet ist, dass die Ebene E die Spule (S) symmetisch teilt.

## Claims

1. Monolithic weight sensor (W) for electronic scales according to the principle of electromagnetic force compensation by means of a coil (S), with a stationary base body (G) and a load sensor (A) which is disposed at a spacing from the base body (G) in a first direction (X), is guided by means of parallel guide elements (P) and can move in a second direction (Y) which is different from the first direction (X),
a) with at least one force transmission element (K₁, K₂, K₃...Kₙ) which is disposed so as to transmit force like a lever,
b) wherein the first force transmission element (K₁) is coupled via a coupling element to the load sensor (A) in order to take up a load acting into the load sensor (A) in the direction (Y), and
c) wherein an imaginary plane (E), which extends in the directions (X) and (Y), symmetrically divides the load sensor (A) or the force due to weight which is introduced into the latter,
**characterised in that**
d) at least one force transmission element (Kᵢ) is formed asymmetrically relative to the plane (E).

2. Weight sensor (W) according to Claim 1, **characterised in that** a plurality of force transmission elements (K₁, K₂, K₃...Kₙ) are provided, these being actively disposed in series so as to transmit force like a lever.

3. Weight sensor (W) according to Claim 1 or 2, **characterised in that** all acting forces are directed parallel or antiparallel to one another at least at one force transmission element (Kᵢ).

4. Weight sensor (W) according to any one of the preceding Claims, **characterised in that** the acting forces are all directed parallel or antiparallel to one another at each force transmission element (K₁, K₂, K₃...Kₙ).

5. Weight sensor (W) according to any one of the preceding Claims, **characterised in that** the force transmission elements (K₁, K₂, K₃...Kₙ) are disposed substantially in a spiral structure.

6. Weight sensor (W) according to Claim 5, **characterised in that** the last force transmission element (Kₙ) or a lever arm (H) disposed thereon passes by way of a portion through the spiral structure from the inside outwards in order to introduce and/or to pick up a force externally.

7. Weight sensor (W) according to any one of the preceding Claims, **characterised in that** a projecting part (T) of the base body (G) extends between the force transmission elements (K₁, K₂, K₃...Kₙ) and forms bearing points (L₁, L₂, L₃...Lₙ) for at least some of the force transmission elements (K₁, K₂, K₃...Kₙ).

8. Weight sensor (W) according to Claim 7, **characterised in that** the projecting part (T) of the base body is formed asymmetrically relative to the plane (E).

9. Weight sensor (W) according to Claim 7 or 8, **characterised in that** the projecting part (T) of the base body (G) comprises at least one step in the direction (X) and/or in the direction (Z) perpendicular to the plane (E).

10. Weight sensor (W) according to any one of Claims 7 to 9, **characterised in that** the stiffness of the projecting base body part (T) in the region of a bearing point (Lᵢ) is reproduced qualitatively or proportionally to the force acting on the bearing point (Lᵢ) from the associated force transmission element (Kᵢ).

11. Weight sensor (W) according to any one of Claims 7 to 10, **characterised in that** at least a portion of the projecting base body part (T) adopts the maximum height between the parallel guide elements (P) in the Y direction.

12. Weight sensor (W) according to any one of Claims 7 to 11, **characterised in that** the cut-outs which are disposed between the elements in order to define the latter are only made in the weight sensor from one processing side.

13. Weight sensor (W) according to any one of the preceding Claims, **characterised in that** the parallel guide elements (P) disposed in the X direction do not comprise any cut-outs in the Y direction.

14. Weight sensor (W) according to any one of the preceding Claims, **characterised in that** the weight sensor (W) does not extend further than 30 mm in the Z direction.

15. Weight sensor (W) according to any one of the preceding Claims, **characterised in that** the coil (S) is disposed such that the plane (E) symmetrically divides the coil (S).

## Revendications

1. Peson monolithique (W) pour une balance électronique fonctionnant selon le principe de la compensation électromagnétique des forces au moyen d'une bobine (S), comprenant un corps de base fixe (G) et un élément récepteur des charges (A) espacé du corps de base (G) dans une première direction (X), guidé au moyen d'éléments de guidage parallèle (P), mobile dans une deuxième direction (Y) différente de la première direction (X),
a) comprenant au moins un élément de changement du rapport de transmission des forces (K₁, K₂, K₃ ... Kₙ) destiné à assurer le changement du rapport de transmission des forces selon le principe des bras de levier,
b) le premier élément (K₁) de changement du rapport de transmission des forces étant couplé à l'élément récepteur des charges (A) par l'intermédiaire d'un élément de couplage en vue de supporter une charge agissant sur l'élément récepteur des charges (A) dans la direction (Y), et
c) un plan imaginaire (E) s'étendant dans les directions (X) et (Y) en divisant l'élément récepteur des charges (A) ou la force de pesanteur appliquée à celui-ci de façon symétrique,
**caractérisé en ce que**
d) au moins un élément (Kᵢ) de changement du rapport de transmission des forces est configuré de façon asymétrique par rapport au plan (E).

2. Peson (W) selon la revendications 1, **caractérisé en ce que** éléments de changement du rapport de transmission des forces (K₁, K₂, K₃ ... Kₙ) destinés à assurer le changement du rapport de transmission des forces selon le principe des bras de levier sont disposés de façon que leurs actions se combinent en série.

3. Peson (W) selon la revendication 1 ou la revendication 2, **caractérisé en ce que** toutes les forces agissant sur l'un au moins des éléments de changement du rapport de transmission des forces (Kᵢ) sont orientées parallèlement ou antiparallèlement les unes aux autres.

4. Peson (W) selon l'une des revendications précédentes, **caractérisé en ce que** les forces agissant sur chacun des éléments de changement du rapport de transmission des forces (K₁, K₂, K₃ ... Kₙ) sont orientées parallèlement ou antiparallèlement les unes aux autres.

5. Peson (W) selon l'une des revendications précédentes, **caractérisé en ce que** les éléments de changement du rapport de transmission des forces (K₁, K₂, K₃ ... Kₙ) sont disposés selon une structure s'enroulant essentiellement en forme de spirale.

6. Peson (W) selon la revendication 5, **caractérisé en ce que** le dernier élément de changement du rapport de transmission des forces (Kₙ) ou un bras de levier (H) monté sur celui-ci traverse la structure en forme de spirale de l'intérieur vers l'extérieur de manière à permettre d'appliquer et/ou de prendre une force à l'extérieur.

7. Peson (W) selon l'une des revendications précédentes, **caractérisé en ce qu'**une partie (T) faisant saillie en avant du corps de base (G) s'étend entre les éléments de changement du rapport de transmission des forces (K₁, K₂, K₃ ... Kₙ) et forme des points d'appui (L₁, L₂, L₃ ... Lₙ) pour une partie au moins des éléments de changement du rapport de transmission des forces (K₁, K₂, K₃ ... Kₙ).

8. Peson (W) selon la revendication 7, **caractérisé en ce que** la partie saillante (T) du corps de base est configurée de façon asymétrique par rapport au plan (E).

9. Peson (W) selon la revendication 7 ou 8, **caractérisé en ce que** la partie saillante (T) du corps de base (G) présente au moins un palier dans la direction (X) et/ou dans la direction (Z) perpendiculaire au plan (E).

10. Peson (W) selon l'une des revendications 7 à 9, **caractérisé en ce que** la raideur de la partie saillante (T) du corps de base, au niveau d'un point d'appui (Lᵢ), est configurée de façon à correspondre, en termes de qualité, ou de façon proportionnelle, à la force appliquée au point d'appui (Lᵢ) à partir de l'élément correspondant (Kᵢ) de changement du rapport de transmission de forces.

11. Peson (W) selon l'une des revendications 7 à 10, **caractérisé en ce qu'**une section au moins de la partie saillante (T) du corps de base occupe la hauteur maximale, dans la direction Y, entre les éléments (P) de guidage parallèle.

12. Peson (W) selon l'une des revendications 7 à 11, **caractérisé en ce que** les évidements aménagés entre les éléments de manière à définir ceux-ci ne sont usinés que d'un côté d'usinage dans le peson.

13. Peson (W) selon l'une des revendications précédentes, **caractérisé en ce que** les éléments (P) de guidage parallèle disposés dans la direction X sont dépourvus d'évidements dans la direction Y.

14. Peson (W) selon l'une des revendications précédentes, **caractérisé en ce que** le peson (W) ne dépasse pas une étendue de 30 mm dans la direction Z.

15. Peson (W) selon l'une des revendications précédentes, **caractérisé en ce que** la bobine (S) est disposée de manière telle que le plan E divise la bobine (S) de façon symétrique.
